# EUROPEAN PATENT APPLICATION

(11) **EP 3 054 119 A1**
(43) Date of publication of application: **10.08.2016**
(21) Application number: 14847132.9
(22) Date of filing: 29.09.2014
(51) Int. Cl.: F01N 3/20, F01N 3/24, F01N 3/28, F01N 3/36, F02D 41/04

(54) **EXHAUST GAS PURIFICATION SYSTEM AND EXHAUST GAS PURIFICATION METHOD**

(30) Priority: 30.09.2013 JP 2013203835
(71) Applicant: Isuzu Motors Limited, Tokyo 140-8722 (JP)
(72) Inventor: NAGAOKA, Daiji, Fujisawa-shi Kanagawa 252-0881 (JP); YUZA, Hiroyuki, Fujisawa-shi Kanagawa 252-0881 (JP); NAKADA, Teruo, Fujisawa-shi Kanagawa 252-0881 (JP)
(74) Representative: WSL Patentanwälte Partnerschaft mbB
(86) International application number: PCT/JP2014/075873
(87) International publication number: WO 2015/046507

(57) **Abstract**

Provided is an exhaust gas purification system 1 including a catalyst device 31a configured to recover a purification capacity of a catalyst by an air-fuel ratio richness control, wherein a richness control permission range α where the air-fuel ratio richness control is permitted to be performed, and a richness control prohibition range β where the air-fuel ratio richness control is prohibited from being performed are provided; by using a catalyst temperature T of the catalyst device 31a and also an air intake amount A of an internal combustion engine 10 as parameters for determination as to the richness control permission range α or the richness control prohibition range β, the richness control prohibition range β is set as a range where the catalyst temperature T of the catalyst device 31a is lower than a preset lower limit catalyst temperature Tc and the air intake amount A is larger than a preset upper limit air intake amount Ac; and further the lower limit catalyst temperature Tc is set to a temperature lower than a catalyst activation temperature Ta. This makes it possible to reduce the HC and NOx slip amounts and raise the catalyst temperature T when the temperature is low.

## Description

### TECHNICAL FIELD

The present invention relates to an exhaust gas purification system and an exhaust gas purification method therefor which make it possible to both reduce the HC and NOx slip amounts and raise the catalyst temperature when the temperature is low, in an exhaust gas purification system including a catalyst device configured to recover a purification capacity of a catalyst by an air-fuel ratio richness control.

### BACKGROUND ART

In general, a vehicle travels by transmitting a power generated by combusting fuel in an internal combustion engine to the wheels through a transmission and the like. The exhaust gas generated by the combustion contains NOx (nitrogen oxides), PM (particulate matter), and the like, and hence is not released directly to the atmosphere. In this respect, an after-treatment device for exhaust gas is provided in an exhaust passage of an internal combustion engine, and a catalyst device supporting a catalyst is provided in the after-treatment device. With this catalyst device, a purification treatment is performed on NOx, PM, and the like contained in the exhaust gas. As a catalyst device for purifying NOx, for example, a NOx storage reduction-type catalyst (LNT: lean NOx trap) or a selective reduction-type NOx catalyst (SCR: selective catalytic reduction) is used.

When a vehicle travels normally, i.e, when the air-fuel ratio of the exhaust gas is in a lean state, the NOx storage reduction-type catalyst device oxidizes NO contained in the exhaust gas to NO₂ and stores the NO₂. When the amount of NOx stored approaches a storage limit, an air-fuel ratio richness control for placing the air-fuel ratio of the exhaust gas in a rich state is performed to release the amount of NOx stored and also reduce the released NOx.

To place the air-fuel ratio of the exhaust gas in a rich state in this air-fuel ratio richness control, post injection is performed based on in-cylinder fuel injection, or fuel is directly injected into the exhaust gas from a fuel injection device provided in the exhaust passage. In this manner, the amount of HCs in the exhaust gas is increased temporarily, and the HCs are combusted with oxygen in the exhaust gas to place the exhaust gas in a rich state.

The amount of NOx storable in this NOx storage reduction-type catalyst device varies depending on the catalyst temperature, and the storable amount of NOx decreases at low temperature and high temperature. For this reason, for example, when the temperature of the exhaust gas is raised at acceleration or the like, and the catalyst temperature raises, the storable amount of NOx decreases. Hence, there arises such a problem that NOx slip occurs in which NOx are released from the NOx storage reduction-type catalyst device, and the NOx are released, as they are, to the atmosphere, and the NOx purification rate decreases.

To solve this problem, the deterioration in NOx purification rate is detected by a NOx sensor provided on a downstream side of the NOx storage reduction-type catalyst device, and rich reduction is frequently carried out to prevent the deterioration in the purification rate. In such a case, the temperature of the exhaust gas is further raised, and the catalyst temperature raises. Hence, there arises such a problem that the storable amount of NOx further decreases, and the NOx slip amount increases.

In addition, when the air-fuel ratio richness control is performed frequently, there arises such a problem that HC slip occurs in which the amount of HCs supplied becomes excessive relative to the rate of the redox reaction of the HCs added to the exhaust gas, and the HCs are not treated sufficiently, but released to the atmosphere.

In this respect, for example, as described in Japanese patent application Kokai publication No. 2009-270446, an exhaust gas purification method and an exhaust gas purification system have been proposed which achieve an improvement in terms of the release of HCs to the atmosphere as follows. Specifically, a HC-adsorbing member for adsorbing HCs in exhaust gas is provided in an exhaust passage of an internal combustion engine on a downstream side of a NOx storage reduction-type catalyst. At a NOx regeneration control, when an index temperature indicative of the temperature of the HC-adsorbing member is not higher than a first judgment temperature, the air-fuel ratio of the exhaust gas is set at 0.8 to 1.1 in terms of air excess ratio, when the index temperature is between the first judgment temperature and a second judgment temperature, the air-fuel ratio of the exhaust gas is set at 1.0 to 1.1 in terms of air excess ratio, and when the index temperature is at or above the second judgment temperature, the air-fuel ratio of the exhaust gas is set at 0.8 to 1.1 in terms of air excess ratio.

Meanwhile, as a solution to these problems, a threshold Tc of the temperature of the NOx storage reduction-type catalyst device is defined for the air-fuel ratio richness control, and the air-fuel ratio richness control is prohibited at or below the threshold Tc. In general, this threshold Tc is set based on a catalyst activation temperature (light-off temperature) Ta of the NOx storage reduction-type catalyst.

However, another purpose of the air-fuel ratio richness control is to raise the catalyst temperature T of the NOx storage reduction-type catalyst by gradually performing the air-fuel ratio richness control. This is because the reaction rate of the catalyst is low, and the NOx removal performance is poor, when the catalyst temperature T is lower than the catalyst activation temperature Ta (for example, about 180°C, although it depends on the catalyst).

### hown b

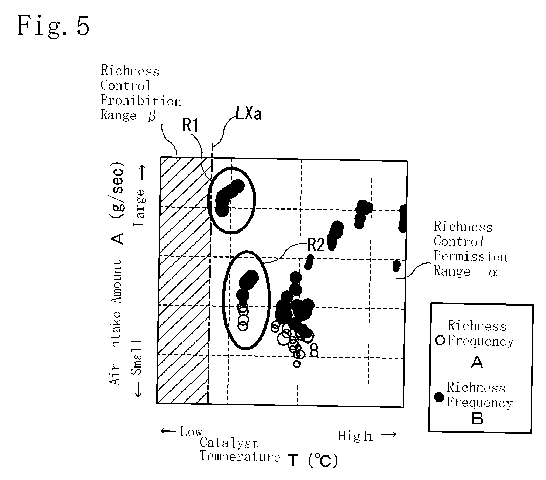

Accordingly, if the threshold temperature Tc is set to be low as indicated by the threshold line Lxa (for example, about 190°C, although it depends on the catalyst) shown in Fig. 5, the air-fuel ratio richness control can be performed in an operation range (R2) where it is desirable to perform the air-fuel ratio richness control for raising the catalyst temperature T, because the catalyst temperature T is low but the HC emission amount is small, whereas the air-fuel ratio richness control cannot be prohibited in an operation range (R1) where it is desirable to prohibit the air-fuel ratio richness control, because the catalyst temperature T is low and the HC emission amount may increase.

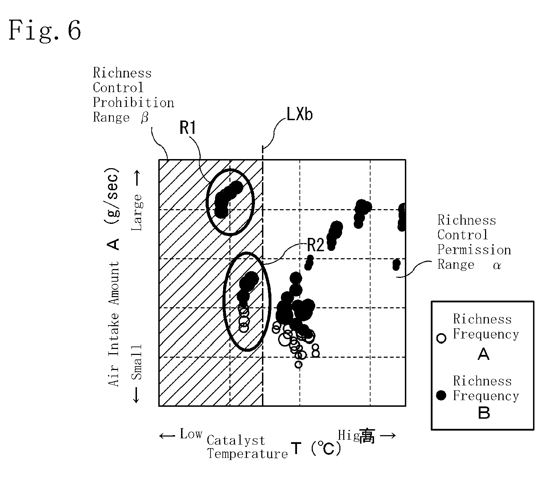

Meanwhile, when the threshold temperature Tc is set to be high as indicated by a threshold line Lxb (for example, about 220°C, although it depends on the catalyst) shown in Fig. 6, the air-fuel ratio richness control can be prohibited in the operation range (R1) where it is desirable to prohibit the air-fuel ratio richness control, because the catalyst temperature T is low and the HC emission amount may increase, whereas the air-fuel ratio richness control cannot be performed in the operation range (R2) where it is desirable to perform the air-fuel ratio richness control for raising the catalyst temperature T, because the catalyst temperature T is low but the HC emission amount is small.

In sum, there are two operation ranges of an internal combustion engine, namely, the operation range (R1) where it is desirable to prohibit the air-fuel ratio richness control, because the catalyst temperature is low, and the HC emission amount increases, and the operation range (R2) where it is desirable to perform the richness control for raising the catalyst temperature, because the catalyst temperature is low, but the HC emission amount is small. Here, there is such a problem that the determination as to the permission or prohibition of the air-fuel ratio richness control based on only the catalyst temperature T cannot cope with both the two ranges.

### PRIOR ART DOCUMENT

### PATENT DOCUMENT

Patent Document 1: Japanese patent application Kokai publication No. 2009-270446

### SUMMARY OF THE INVENTION

### PROBLEM TO BE SOLVED BY THE INVENTION

The present invention has been made in view of the above-described problems, and an object of the present invention is to provide an exhaust gas purification system and an exhaust gas purification method therefor which make it possible to both reduce the HC and NOx slip amounts and raise the catalyst temperature when the temperature is low, in an exhaust gas purification system including a catalyst device configured to recover a purification capacity of a catalyst by an air-fuel ratio richness control.

### MEANS FOR SOLVING THE PROBLEM

An exhaust gas purification system of the present invention for achieving the above-described object is an exhaust gas purification system comprising:
a catalyst device provided in an exhaust passage of an internal combustion engine and configured to recover a purification capacity of a catalyst by an air-fuel ratio richness control; and
a controlling device configured to perform the air-fuel ratio richness control, wherein
the controlling device is configured to set a richness control permission range where the air-fuel ratio richness control is permitted to be performed and richness control prohibition range where the air-fuel ratio richness control is prohibited from being performed, and use a catalyst temperature of the catalyst device and also an air intake amount of the internal combustion engine as parameters for determination as to the richness control permission range or the richness control prohibition range,
the richness control prohibition range is set as a range where the catalyst temperature of the catalyst device is lower than a preset lower limit catalyst temperature, or the air intake amount is larger than a preset upper limit air intake amount, and
further, the lower limit catalyst temperature is set to a temperature lower than a catalyst activation temperature.

According to this configuration, the air-fuel ratio richness control is permitted or prohibited according to the catalyst temperature of the catalyst device and the air intake amount of the internal combustion engine. Hence, an operation range where it is desirable to prohibit the air-fuel ratio richness control, because the catalyst temperature is low, and the HC emission amount increases can be included in the richness control prohibition range by setting this operation range as a range where the air intake amount is larger than the preset upper limit air intake amount. In addition, an operation range where it is desirable to perform the richness control for raising the catalyst temperature, because the catalyst temperature is low, but the HC emission amount is small, can be included in the richness control permission range by setting the lower limit catalyst temperature to a temperature lower than a catalyst activation temperature.

Note that the lower limit catalyst temperature is preferably set to a temperature lower than the catalyst activation temperature by about 20°C to 30°C, although it depends on the catalyst. Actually, the lower limit catalyst temperature is set based on experiments or the like.

Accordingly, the air-fuel ratio richness control can be appropriately permitted or prohibited, and the regeneration treatment of the catalyst device can be appropriately performed. Hence, it is possible to both reduce the HC and NOx slip amounts when the air-fuel ratio richness control is performed for recovering the purification capacity of the catalyst in the catalyst device and raise the catalyst temperature when the temperature is low. Moreover, it is only necessary to simply change the control parameter and the control map, and no additional device is required. Hence, the increase in costs can be prevented.

In the above-described exhaust gas purification system, the controlling device may be configured to set the upper limit air intake amount, which varies depending on the catalyst temperature of the catalyst device. In this case, the generation of HCs can be reduced more precisely.

Meanwhile, an exhaust gas purification method of the present invention for achieving the above-described object is an exhaust gas purification method, in which exhaust gas is purified with a catalyst device provided in an exhaust passage of an internal combustion engine and configured to recover a purification capacity of a catalyst by an air-fuel ratio richness control, the method comprising:
setting a lower limit catalyst temperature to a temperature lower than a catalyst activation temperature;
by using a catalyst temperature of the catalyst device and also an air intake amount of the internal combustion engine as determination parameters, setting a richness control permission range where the catalyst temperature of the catalyst device is not lower than the lower limit catalyst temperature, and the air intake amount is not larger than a preset upper limit air intake amount and a richness control prohibition range which is other than the richness control permission range; and
permitting the air-fuel ratio richness control to be performed, when a combination of the catalyst temperature of the catalyst device and the air intake amount is in the richness control permission range, whereas prohibiting the air-fuel ratio richness control from being performed, when the combination is in the richness control prohibition range.

These methods make it possible to achieve the same effect as that achieved by the above-described exhaust gas purification system.

### EFFECTS OF THE INVENTION

According to the exhaust gas purification system and the exhaust gas purification method of the present invention, the air-fuel ratio richness control for recovering the purification capacity of the catalyst in the catalyst device is permitted or prohibited according to the catalyst temperature of the catalyst device and the air intake amount of the internal combustion engine. Hence, the air-fuel ratio richness control can be appropriately permitted or prohibited, and the regeneration treatment of the catalyst device can be appropriately performed. This makes it possible to both reduce the HC and NOx slip amounts when the air-fuel ratio richness control is performed and raise the catalyst temperature when the temperature is low.

### BRIEF DESCRIPTION OF THE DRAWINGS

[Fig. 1] Fig. 1 is a diagram schematically showing a configuration of an exhaust gas purification system including a NOx storage reduction-type catalyst device of an embodiment according to the present invention.
[Fig. 2] Fig. 2 is a diagram showing an example of a control flow of an exhaust gas purification method of the embodiment according to the present invention.
[Fig. 3] Fig. 3 shows an example of a richness control map used in the exhaust gas purification method of the embodiment according to the present invention.
[Fig. 4] Fig. 4 is a graph showing a time series of the catalyst temperature and the HC emission amount of the NOx storage reduction-type catalyst device of the embodiment according to the present invention.
[Fig. 5] Fig. 5 shows a richness control map in a case where a low catalyst temperature threshold is set in a conventional technology.
[Fig. 6] Fig. 6 shows a richness control map in a case where a high catalyst temperature is set in the conventional technology.

### MODES FOR CARRYING OUT THE INVENTION

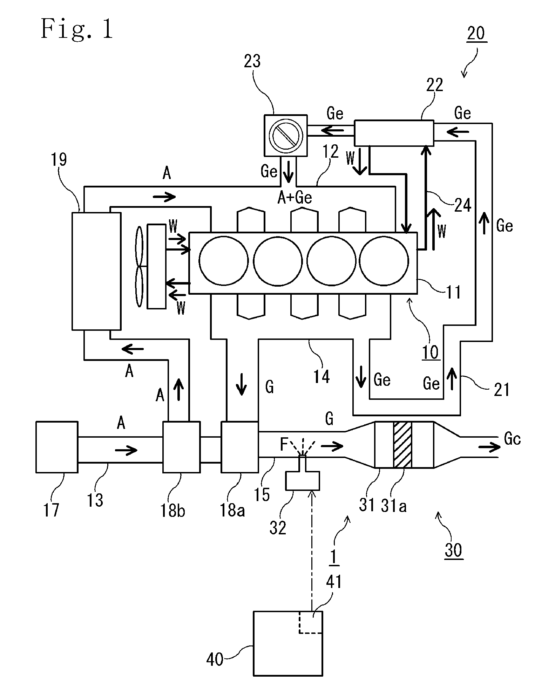

Hereinafter, an exhaust gas purification system and an exhaust gas purification method of an embodiment according to the present invention are described with reference to the drawings. As shown in Fig. 1, an engine (internal combustion engine) 10 equipped with an exhaust gas purification system 1 of a first embodiment of the present invention includes an engine main body 11, an intake passage 13, and an exhaust passage 15.

In the intake passage 13 connected to an intake manifold 12 of the engine main body 11, an air cleaner 17, a compressor 18b of a turbocharger 18, and an intercooler 19 are provided in this order from an upstream side. Meanwhile, in the exhaust passage 15 connected to an exhaust manifold 14 of the engine main body 11, a turbine 18a of the turbocharger 18 is provided in this order from the upstream side.

In addition, the engine 10 is equipped with an EGR system 20 and an exhaust gas purification system 30 including an exhaust gas purification device 31 provided in the exhaust passage 15.

The EGR system 20 includes an EGR passage 21 connecting the intake manifold 12 and the exhaust manifold 14 to each other, and also includes an EGR cooler 22 and an EGR valve 23 provided in this EGR passage 21 in this order from the upstream side.

This EGR cooler 22 is a device configured to perform heat exchange between EGR gas Ge and engine coolant water W. The EGR gas Ge is cooled by this heat exchange to reduce the volume of the EGR gas Ge, so that the air intake efficiency is improved.

On the other hand, the exhaust gas purification system 30 includes the exhaust gas purification device 31 disposed in the exhaust passage 15 and configured to perform a treatment for purifying NOx (nitrogen oxides), PM (particulate matter), and the like contained in exhaust gas G generated by the combustion reaction in the engine main body 11. The exhaust gas Gc subjected to the purification treatment is released to the atmosphere through a muffler (not illustrated) or the like. This exhaust gas purification device 31 includes a combination of a NOx storage reduction-type catalyst device (LNT: catalyst device) 31a, an oxidation catalyst device (DOC) (not illustrated), a selective reduction-type catalyst device (SCR) (not illustrated), and the like.

When a vehicle travels normally, i.e., when the air-fuel ratio of the exhaust gas G is in a lean state, this NOx storage reduction-type catalyst device 31a oxidizes NO contained in the exhaust gas G to NO₂, and stores the NO₂. When the amount of NOx stored approaches a storage limit, an air-fuel ratio richness control for placing the air-fuel ratio of the exhaust gas G in a rich state is performed to release the amount of NOx stored and also reduce the released NOx.

To place the air-fuel ratio of the exhaust gas G in a rich state in the air-fuel ratio richness control, post injection is conducted based on in-cylinder fuel injection, or fuel F is directly injected into the exhaust gas G from a fuel injection device 32 provided in the exhaust passage 15. In this manner, the amount of HCs in the exhaust gas G is increased temporarily, and the HCs are combusted with oxygen in the exhaust gas G to place the exhaust gas G in a rich state.

In addition, a controlling device 41 configured to perform the air-fuel ratio richness control on the NOx storage reduction-type catalyst device 31a is provided. This controlling device 41 is generally integrated in an entire system-controlling device 40 configured to control the entirety of the engine 10 or the entirety of a vehicle on which the engine 10 is mounted.

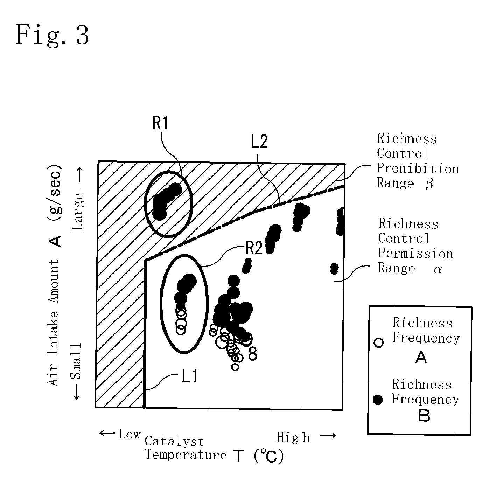

In the present invention, this controlling device 41 is configured as follows. Specifically, as shown in Fig. 3, in a richness control map based on a catalyst temperature T of the NOx storage reduction-type catalyst device 31a and an air intake amount A of the engine 10, a richness control permission range α where the air-fuel ratio richness control is permitted to be performed, and a richness control prohibition range β where the air-fuel ratio richness control is prohibited from being performed are provided. In addition, by using the catalyst temperature T of the NOx storage reduction-type catalyst device 31a and also the air intake amount A of the engine 10 as parameters for determination as to the richness control permission range α or the richness control prohibition range β, the richness control prohibition range β is set as a range where the catalyst temperature T is lower than a preset lower limit catalyst temperature Tc or the air intake amount A is larger than a preset upper limit air intake amount Ac. Moreover, the lower limit catalyst temperature Tc is set to a temperature lower than a catalyst activation temperature Ta.

Note that the lower limit catalyst temperature Tc is preferably set to a temperature lower than the catalyst activation temperature Ta (generally about 180°C to 200°C, although it depends on the catalyst) by about 20°C to 30°C, and is actually set based on experiments or the like.

A determination temperature line L1 shown in Fig. 3 is set equal to the value of the lower limit catalyst temperature Tc. On the other hand, a determination air intake amount line L2 is set to a value of the upper limit air intake amount Ac calculated in advance based on experiments or the like. This upper limit air intake amount Ac may be set to a constant value. However, when the upper limit air intake amount Ac is set so as to vary depending on the catalyst temperature T as shown in Fig. 3, the formation of HCs can be reduced more precisely. Note that this upper limit air intake amount Ac is preferably set to be about 30% to 60% of an air intake amount at a time where the engine 10 is operated at a rated output, although it depends on the catalyst. The upper limit air intake amount Ac is actually set based on experiments or the like.

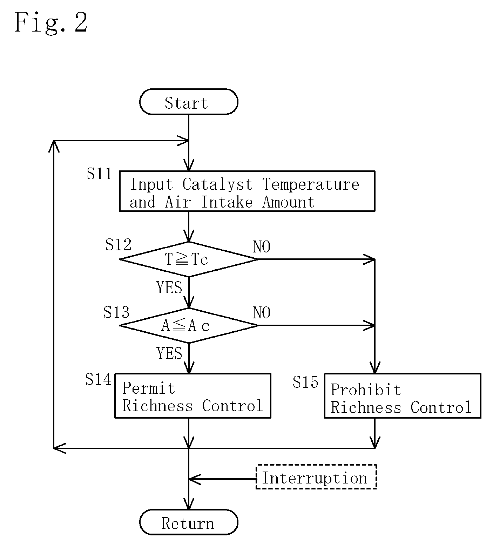

Next, an exhaust gas purification method performed in the above-described exhaust gas purification system 1 is described with reference to an example of a control flow shown in Fig. 2. With the ignition and start of the engine 10, the control flow of Fig. 2 is called by an upper control flow and started. By using the richness control map as shown in Fig. 3, it is determined that the richness control of the air-fuel ratio of the exhaust gas G is permitted to be performed, or prohibited from being performed. After each determination, the process returns to the upper control flow. When called again by the upper control flow, the control flow of Fig. 2 is repeated during operation of the engine 10. In addition, the control flow shows that when the engine 10 is stopped, the process is interrupted and returns to the upper control flow, and the control flow of Fig. 2 is finished with the finish of the upper control flow.

When this control flow of Fig. 2 is called by the upper control flow and started, the catalyst temperature T of the NOx storage reduction-type catalyst device 31a and the air intake amount A entering the engine 10 are inputted in Step S11. Regarding this catalyst temperature T, the temperature of the exhaust gas G on an upstream side of the NOx storage reduction-type catalyst device 31a detected with a temperature sensor (not illustrated) or the like is generally employed as a substitute for the catalyst temperature T. Alternatively, the temperature of the exhaust gas G on a downstream side of the NOx storage reduction-type catalyst device 31a detected with a temperature sensor (not illustrated) or the like may be employed as a substitute for the catalyst temperature T, or an average value of the temperatures of the exhaust gas G on the upstream side and the downstream side of the NOx storage reduction-type catalyst device 31a may be used as a substitute for the catalyst temperature T.

In addition, a MAF (mass air flow meter) (not illustrated) is provided in the intake passage 13, and the air intake amount A of the engine 10 is detected by this MAF, in general. However, as long as the air intake amount A can be detected or calculated, the air intake amount A of the engine 10 may be based on any other device or method.

In the next Step S12, it is determined whether or not the catalyst temperature T is at or above the lower limit catalyst temperature Tc. When the catalyst temperature T is lower than the lower limit catalyst temperature Tc (NO) in Step S12, the process proceeds to Step S15, where it is determined that the system is in the richness control prohibition range β, and the air-fuel ratio richness control is prohibited. Then, after a preset control time has elapsed, the process returns to Step S11.

On the other hand, when the catalyst temperature T is at or above the lower limit catalyst temperature Tc in Step S12 (YES), the process proceeds to Step S13, where it is determined whether or not the air intake amount A is equal to or smaller than the upper limit air intake amount Ac. When the air intake amount A is equal to or smaller than the upper limit air intake amount Ac in Step S13 (YES), the process proceeds to Step S14, where it is determined that the system is in the richness control permission range β, and the air-fuel ratio richness control is permitted. Then, after a preset control time has elapsed, the process returns to Step S11.

Meanwhile, when the air intake amount A is larger than the upper limit air intake amount Ac in Step S13 (NO), the process proceeds to Step S15, where it is determined that the system is in the richness control prohibition range β, and the air-fuel ratio richness control is prohibited. Then, after a preset control time has elapsed, the process returns to Step S11.

After the process returns to Step S11, Steps S11 to S14 or Steps S11 to S15 are repeated, until an interruption occurs because of the stop of the engine 10. When the interruption occurs because of the stop of the engine 10, the process proceeds to Return, and returns to the upper control flow. Then, this control flow is finished together with the upper control flow.

In the exhaust gas purification method, in which the exhaust gas G is purified by the NOx storage reduction-type catalyst device (catalyst device) 31a provided in the exhaust passage 15 of the engine 10 (internal combustion engine) and configured to recover the purification capacity of the catalyst by the air-fuel ratio richness control, the lower limit catalyst temperature Tc is set to a temperature lower than the catalyst activation temperature Ta, and the richness control permission range α where the catalyst temperature T of the NOx storage reduction-type catalyst device 31a is higher than the lower limit catalyst temperature Tc, and the air intake amount A is equal to or smaller than the preset upper limit air intake amount Ac, and the richness control prohibition range β other than the richness control permission range α are provided by using the catalyst temperature T of the NOx storage reduction-type catalyst device 31a and also the air intake amount A of the engine 10 as determination parameters. In this exhaust gas purification method, the above-described control can permit the air-fuel ratio richness control to be performed, when a combination of the catalyst temperature T of the NOx storage reduction-type catalyst device 31a and the air intake amount A is in the richness control permission range α, whereas this control can prohibit the air-fuel ratio richness control from being performed, when the combination is in the richness control prohibition range β.

According to the exhaust gas purification system 1 and the exhaust gas purification method configured as described above, the air-fuel ratio richness control is permitted or prohibited according to the catalyst temperature T of the NOx storage reduction-type catalyst device 31a and the air intake amount A of the engine 10. Accordingly, an operation range where it is desirable to prohibit the air-fuel ratio richness control, because the catalyst temperature T is low and the HC emission amount may increase can be included in the richness control prohibition range β by setting this operation range as a range where the air intake amount A is larger than the preset upper limit air intake amount Ac. In addition, an operation range where it is desirable to perform the richness control for raising the catalyst temperature T, because the catalyst temperature T is low but the HC emission amount is small can be included in the richness control permission range α by setting the lower limit catalyst temperature Tc to a temperature lower than the catalyst activation temperature Ta.

Accordingly, the air-fuel ratio richness control can be appropriately permitted or prohibited, and the regeneration treatment of the NOx storage reduction-type catalyst device 31a can be appropriately performed. Hence, it is possible to reduce the HC and NOx slip amounts in performing the air-fuel ratio richness control for recovering the purification capacity of the catalyst of the NOx storage reduction-type catalyst device 31a, as well as to raise the catalyst temperature T when the temperature is low. Moreover, it is only necessary to simply change the control parameter and the control map, and no additional device is required. Hence, the increase in costs can be prevented.

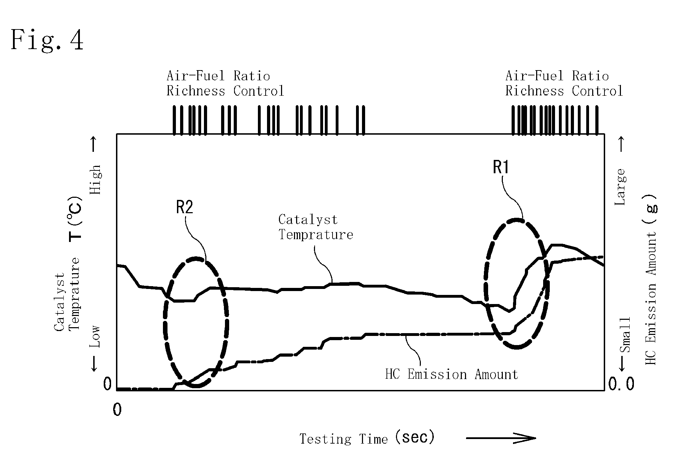

In addition, regarding the frequency of the air-fuel ratio richness control, it has been found based on experiments that the richness frequency in a case where the air-fuel ratio richness control is performed according to the richness control map of the conventional technology as shown in Fig. 5 is as shown by "richness frequency A", whereas the richness frequency in a case where the air-fuel ratio richness control is performed according to the richness control map of the present invention as shown in Fig. 3 is as shown by "richness frequency B". Note that R1 and R2 in Fig. 3 are respectively corresponding to the air-fuel ratio richness controls in R1 and R2 in time-series data shown in Fig. 4.

### EXPLANATION OF REFERENCE NUMERALS

1 exhaust gas purification system
10 engine
15 exhaust passage
30 exhaust gas purification system
31 exhaust gas purification device
31a NOx storage reduction-type catalyst device (catalyst device)
32 fuel injection device
40 entire system-controlling device
41 controlling device
G exhaust gas
T catalyst temperature
Ta catalyst activation temperature
Tc lower limit catalyst temperature
A air intake amount
Ac upper limit air intake amount
L1, LXa, LXb determination temperature line
L2 determination air intake amount line
R1, R2 range where air-fuel ratio richness control is performed
α richness control permission range
β richness control prohibition range

## Claims

1. An exhaust gas purification system, comprising:
a catalyst device provided in an exhaust passage of an internal combustion engine and configured to recover a purification capacity of a catalyst by an air-fuel ratio richness control; and
a controlling device configured to perform the air-fuel ratio richness control, wherein
the controlling device is configured to set a richness control permission range where the air-fuel ratio richness control is permitted to be performed and a richness control prohibition range where the air-fuel ratio richness control is prohibited from being performed, and use a catalyst temperature of the catalyst device and also an air intake amount of the internal combustion engine as parameters for determination as to the richness control range or the richness control prohibition range,
the richness control prohibition range is set as a range where the catalyst temperature of the catalyst device is lower than a preset lower limit catalyst temperature and the air intake amount is larger than a preset upper limit air intake amount, and
further, the lower limit catalyst temperature is set to a temperature lower than a catalyst activation temperature.

2. The exhaust gas purification system according to claim 1, wherein
the controlling device is configured to set the upper limit air intake amount, which varies depending on the catalyst temperature of the catalyst device.

3. An exhaust gas purification method, in which exhaust gas is purified with a catalyst device provided in an exhaust passage of an internal combustion engine and configured to recover a purification capacity of a catalyst by an air-fuel ratio richness control, the method comprising:
setting a lower limit catalyst temperature to a temperature lower than a catalyst activation temperature;
by using a catalyst temperature of the catalyst device and also an air intake amount of the internal combustion engine as determination parameters, setting a richness control permission range where the catalyst temperature of the catalyst device is higher than the lower limit catalyst temperature, and the air intake amount is smaller than a preset upper limit air intake amount and a richness control prohibition range which is other than the richness control permission range; and
permitting the air-fuel ratio richness control to be performed, when a combination of the catalyst temperature of the catalyst device and the air intake amount is in the richness control permission range, whereas prohibiting the air-fuel ratio richness control from being performed, when the combination is in the richness control prohibition range.
